# EUROPÄISCHE PATENTSCHRIFT

(11) **EP 1 527 109 B1**
(45) Veröffentlichungstag und Bekanntmachung des Hinweises auf die Patenterteilung: **12.09.2007**
(21) Anmeldenummer: 03766231.9
(22) Anmeldetag: 18.07.2003
(51) Int. Cl.: C08F 20/06

(54) **VERFAHREN ZUR HERSTELLUNG VON POLYMEREN**
METHOD FOR PRODUCING POLYMERS
PROCEDE DE PREPARATION DE POLYMERES

(30) Priorität: 30.07.2002 DE 10234772
(43) Veröffentlichungstag der Anmeldung: 04.05.2005
(73) Patentinhaber: BASF Aktiengesellschaft, 67056 Ludwigshafen (DE)
(72) Erfinder: DANIEL, Thomas, 67165 Waldsee (DE); RIEGEL, Ulrich, 60386 Frankfurt (DE); ELLIOTT, Mark, 67063 Ludwigshafen (DE)
(86) Internationale Anmeldenummer: PCT/EP2003/007872
(87) Internationale Veröffentlichungsnummer: WO 2004/013196

(56) Entgegenhaltungen:
- EP-A- 0 303 518
- EP-A- 0 312 952
- EP-A- 0 347 241
- AU-B- 452 133
- FR-A- 2 367 083

## Beschreibung

Die Erfindung betrifft ein Verfahren zur Herstellung von Polymeren, die Natriumacrylateinheiten enthalten, in wäßrigem Medium.

Die Herstellung von Natriumacrylat ist bekannt. So mischt man beispielsweise gemäß der Lehre der GB-C-1,073,856 eine Lösung von Natronlauge in Methanol mit einer Lösung von Acrylsäure in Methanol bei Temperaturen in dem Bereich von 5 bis 50°C. Vorzugsweise fügt man die Lösung der Natronlauge in Methanol zur Acrylsäurelösung. Das dabei entstehende Natriumacrylat fällt aus der Lösung aus und kann zentrifugiert bzw. abfiltriert werden. Das feste Natriumacrylat kann getrocknet werden, wobei man vorzugsweise eine Temperatur von unterhalb 40°C einstellt.

Aus der EP-B-0 372 706 ist die Herstellung von Salzen der Acrylsäure durch Neutralisation von Acrylsäure mit einer basischen Verbindung in wäßrigem Medium bekannt, wobei man Acrylsäure und basische Verbindung zu Wasser zusetzt und den Neutralisationsgrad der Acrylsäure zunächst auf 75 bis 100 Mol-% einstellt, dann den Neutralisationsgrad durch weitere Zugabe der basischen Verbindung auf 100,1 bis 110 Mol-% erhöht, das Reaktionsgemisch 1 Minute bis 120 Minuten bei diesem Neutralisationsgrad beläßt und anschließend soviel Acrylsäure zugibt, daß der Neutralisationsgrad der Acrylsäure 20 bis 100 Mol-% beträgt. Die so erhältlichen wäßrigen Lösungen von teilweise oder vollständig neutralisierter Acrylsäure werden in Gegenwart von Vernetzern zur Herstellung von vernetzten Polyacrylaten eingesetzt, die einen geringeren Restmonomerengehalt als diejenigen Polymeren haben, die durch Polymerisation von Acrylaten erhältlich sind, die nicht mit einem Überschuß an Neutralisationsmittel behandelt wurden.

Um eine vorzeitige Polymerisation zu vermeiden bzw. zurückzudrängen, enthält die handelsübliche Acrylsäure in aller Regel mindestens einen Stabilisator. Polymerisiert man eine stabilisatorhaltige Acrylsäure, so erhält man beispielsweise bei der Herstellung von superabsorbierenden Polymeren nach dem aus der obengenannten Literaturstelle bekannten Verfahren gefärbte Produkte. Um farblose Superabsorber herzustellen, ist es erforderlich, eine stabilisatorhaltige Acrylsäure zunächst zu destillieren oder den Stabilisator durch Absorption z.B. an Aktivkohle, aus der Acrylsäure zu entfernen und die Acrylsäure möglichst umgehend zu polymerisieren.

Der vorliegenden Erfindung liegt die Aufgabe zugrunde, ein Polymerisationsverfahren zur Verfügung zu stellen, wobei man Polymere erhält, die farblos sind und die außerdem einen geringeren Restmonomergehalt haben als Polymere, die aus einer stabilisatorhaltigen Acrylsäure herstellbar sind.

Die Aufgabe wird erfindungsgemäß gelöst mit einem Verfahren zur Herstellung von Polymeren, die Natriumacrylateinheiten enthalten, durch radikalische Polymerisation von Natriumacrylat und gegebenenfalls anderen Monomeren in wäßrigem Medium, wenn man eine wäßrige Lösung oder Dispersion von Natriumacrylat einsetzt, die durch Lösen oder Dispergieren von festem Natriumacrylat in einem wäßrigen Medium erhältlich ist.

Natriumacrylat in fester Form ist zwar in der Literatur beschrieben, wurde jedoch bisher nicht zur Herstellung von Polymeren verwendet. Um Natriumacrylateinheiten enthaltende Polymere herzustellen, ging man bisher immer von wäßrigen Natriumacrylatlösungen aus, die - meistens unmittelbar vor der Polymerisation - durch Neutralisieren von reiner Acrylsäure oder von stabilisatorhaltiger Acrylsäure mit wäßriger Natronlauge hergestellt wurde. Da reine Acrylsäure nicht beständig ist, war es erforderlich, sie direkt nach der Destillation bzw. nach einer fraktionierten Kristallisation mit wäßriger Natronlauge zu neutralisieren. Das feste Natriumacrylat ist ausreichend beständig, so daß es ohne Stabilisierung gegen Polymerisation längere Zeit gelagert und transportiert werden kann. Für Lagerung und Transport von Natriumacrylat sollten die Temperaturen 40°C nicht übersteigen. Sie liegen meistens in dem Bereich von beispielsweise 5 bis 35°C, insbesondere 10 bis 20°C.

Das feste Natriumacrylat hat beispielsweise einen mittleren Teilchendurchmesser von 45 µm bis 2000 µm, vorzugsweise 45 µm bis 500 µm. Vorzugsweise geht man zur Herstellung der wäßrigen Monomerlösungen von wasserfreiem Natriumacrylat aus. Das feste, pulverförmige Natriumacrylat, das hygroskopisch ist, kann jedoch auch beispielsweise 0,1 bis 10 Gew.-%, insbesondere 0,5 bis 2 Gew.-% Wasser enthalten. Beim Erhitzen von festem Natriumacrylat tritt bis zu einer Temperatur von 250°C praktisch keine Veränderung des festen Salzes ein, es zersetzt sich vielmehr erst oberhalb dieser Temperatur beim Schmelzen.

Das feste Natriumacrylat ist sehr leicht in Wasser löslich. Man kann daraus wäßrige Monomerlösungen oder wässrige Dispersionen bereiten, die beispielsweise 5 bis 75, vorzugsweise 20 bis 45 Gew.-% Natriumacrylat enthalten. Oberhalb einer Konzentration von mehr als 45 Gew.% Natriumacrylat liegen Dispersionen von Natriumacrylat vor. Diese Lösungen bzw. Dispersionen können direkt polymerisiert werden. Bei der Polymerisation der wässrigen Natriumacrylatdispersionen reagiert zunächst das in Wasser gelöste Natriumacrylat, das dispergierte Natriumacrylat löst sich im Verlauf der Polymerisation. Man kann jedoch auch gegebenenfalls Acrylsäure zu diesen Lösungen geben, so daß man eine partiell neutralisierte Acrylsäure mit einem Neutralisationsgrad von beispielsweise 10 bis 95 Mol-%, vorzugsweise 40 bis 90 Mol-% und insbesondere 60 bis 80 Mol-% erhält.

Die wäßrigen Monomerlösungen bzw. Dispersionen, die durch Lösen bzw. Dispergieren von festem Natriumacrylat und gegebenenfalls Acrylsäure in Wasser hergestellt werden, können gegebenenfalls weitere wasserlösliche Comonomere enthalten, z.B. Methacrylsäure, Maleinsäure, Itaconsäure, 2-Acrylamido-2-methylpropansulfonsäure, Alkalimetall- und Ammoniumsalze sowie Amide der genannten Säuren, Hydroxyalkylester von Acrylsäure oder Methacrylsäure, N-Vinylformamid und Diallyldimethylammoniumchlorid. Die erfindungsgemäß einzusetzenden wäßrigen Monomerlösungen von Natriumacrylat können auch mit wasserunlöslichen Monomeren wie Styrol und/oder (Meth)acrylsäureestern von einwertigen Alkoholen, z.B. n-, tert.- oder Iso-butylacrylat, Acrylnitril, Methacrylnitril und/oder Vinylestern wie Vinylacetat oder Vinylpropionat, copolymerisiert werden. Hierbei erhält man wäßrige Dispersionen oder - je nach Menge der bei der Copolymerisation eingesetzten wasserlöslichen Monomeren - wäßrige Polymerlösungen von hydrophob modifizierten Polymeren.

In der bevorzugten Verfahrensvariante setzt man der Acrylatlösung vor der Polymerisation noch saure Comonomere wie z.B. Acrylsäure zu.

Das feste Natriumacrylat kann erfindungsgemäß auch ganz oder teilweise durch ein anderes festes wasserlösliches Salz ersetzt werden, z.B. durch Kaliumacrylat oder durch Erdalkalimetallacrylate wie insbesondere Magnesium-, Strontium oder Bariumacrylat. Auch Mischungen der in Betracht kommenden festen Alkalimetall- und Erdalkalimetallacrylate können polymerisiert werden.

Die erfindungsgemäß einzusetzenden wäßrigen Monomerlösungen oder Dispersionen von Natriumacrylat und gegebenenfalls Acrylsäure werden vorzugsweise zur Herstellung von wasserunlöslichen, vernetzten, gelförmigen Polymerisaten verwendet. Solche Polymeren werden erhalten, indem man die erfindungsgemäß einzusetzenden wäßrigen Lösungen von Natriumacrylat in Gegenwart von 0,001 bis 5 Gew.-%, vorzugsweise 0,01 bis 2 Gew.-% eines mindestens zwei ethylenisch ungesättigte Doppelbindungen aufweisenden Monomeren polymerisiert. Geeignete Vernetzer sind beispielsweise N,N'-Methylenbisacrylamid, Diacrylate oder Dimethacrylate von Polyalkylenglykolen mit Molmassen von 100 bis 1500, Trimethylolpropantrimethacrylat, mindestens zweifach mit Acrylsäure oder mit Methacrylsäure veresterte Umsetzungsprodukte von Trimethylolpropan mit 1 bis 8 Mol Ethylenoxid pro OH-Gruppe, insbesondere die vollständig mit Acrylsäure oder Methacrylsäure veresterten Umsetzungsprodukte von Trimethylolpropan mit 2 bis 6 Mol Ethylenoxid pro OH-Gruppe, Triallylamin oder Tetraallylammoniumchlorid. Verfahren zur Herstellung der gelförmigen, vernetzen Polymeren sind beispielsweise aus der zum Stand der Technik genannten EP-B-0 372 706, Seiten 6 und 7 sowie der WO-A-99/42494, Seiten 4 bis 8 sowie der WO 01/38402 bekannt. Man erhält teilchenförmige Hydrogele, die einen mittleren Teilchendurchmesser von beispielsweise 45 bis 1000 µm, vorzugsweise 150 bis 850 µm, besonders bevorzugt <700 µm haben.

Um teilchenförmige Hydrogele mit einer hohen Gelfestigkeit herzustellen, unterwirft man die teilchenförmigen Hydrogele einer Oberflächennachvernetzung. Beispiele für geeignete Oberflächennachvernetzungsmittel sind mehrwertige Alkohole, vgl. US-A-4 666 983, sowie 2-Oxazolidinone, vgl. WO-A-99/42494. Die Nachvernetzung von teilchenförmigen Hydrogelen ist in den genannten Literaturstellen ausführlich beschrieben. Üblicherweise besprüht man die teilchenförmigen Hydrogele mit einer Lösung mindestens eines Vernetzers in einem inerten Lösemittel wie Wasser oder Gemischen von Wasser mit einem einwertigen oder mehrwertigen Alkohol. Zur Oberflächennachvernetzung erhitzt man die mit einer Lösung des Vernetzers behandelten Hydrogelteilchen auf eine Temperatur in dem Bereich von 50 bis 250°C, vorzugsweise 115 bis 190°C.

Die erfindungsgemäße Verwendung von festem Natriumacrylat zur Herstellung der wäßrigen Monomerlösungen führt zu Polymeren, die gegenüber den nach den bekannten Verfahren erhaltenen teilchenförmigen Hydrogelen eine verbesserte Farbzahl und einen geringeren Restmonomergehalt an Acrylsäure aufweisen.

Die Salze der Acrylsäure sind in festem Zustand als auch in wäßriger Lösung stabil, so daß bei der Lagerung der festen Salze bzw. von wäßrigen Lösungen der Salze keine Diacrylsäure gebildet wird. Polymere, die aus diesem Monomeren hergestellt werden, können ohne Erhöhung des Restgehaltes an Acrylsäure im Polymeren auf höhere Temperaturen erhitzt werden, z.B. auf 190 bis 210°C. Wird dagegen bei der Polymerisation Acrylsäure eingesetzt, die Diacrylsäure enthält, so beobachtet man beim Erhitzen von Polymeren, die aus diesen Monomeren hergestellt wurden, eine Rückspaltung der einpolymerisierten Diacrylsäure unter Freisetzung von Acrylsäure. Daher haben solche Polymere nach einer thermischen Beanspruchung einen höheren Restmonomergehalt als vorher. Natriumacrylat braucht außerdem nicht durch Zusatz von Inhibitoren gegen vorzeitige Polymerisation stabilisiert zu werden.

So erhält man beispielsweise nach der Oberflächenvernetzung teilchenförmige Hydrogele mit einer Farbzahl nach DIN 5033 L ≥90 sowie Farbzahl b < 10, vorzugsweise ist L ≥ 93 und b < 8.

Die Werte für die SFC (Saline Flow Conductivity) der an der Oberfläche nachvernetzten Teilchen betragen beispielsweise >25, bevorzugt >60 und insbesondere >100. Der Gehalt an restlicher Acrylsäure in den teilchenförmigen Hydrogelen, die einer Oberflächennachvernetzung unterworfen wurden, liegt beispielsweise <500 ppm, vorzugsweise <300 ppm. Diese Teilchen haben eine CRC (Centrifuge Retention Capacity) von 20 bis 35 g/g.

### Meßmethoden

Die Bestimmung swe 16 h-Extrahierbaren wurde gemäß ISO/DIS 17190-10 durchgeführt. SFC (Saline Flow Conductivity) wurde nach der in der US-A-5,599,335 angegebenen Testmethode bestimmt.

CRC (Centrifuge Retention Capacity) und AUL (Absorption under Load) wurden nach der auf den Seiten 8 und 9 der WO-A-99/42494 gegebenen Vorschrift ermittelt.

Die Farbzahlen wurden nach DIN 5033 ermittelt (siehe auch Richard S. Hunter, The Measurement of Appearamee, Wiley Ny 1975). Verwendet wurde ein Hunterlab LS 5100 Colorimeter.

Die Prozentangaben in den Beispielen bedeuten Gewichtsprozent.

### Vergleichsbeispiel 1

In einem Kunststoffaß mit innenliegendem Wärmeaustauscher wurden 14,24 kg 50%ige wäßrige Natronlauge vorgelegt und schrittweise unter Kühlen mit 17,08 kg Acrylsäure, die mit 200 ppm Hydrochinonmonomethylether stabilisiert war, neutralisiert. Gleichzeitig wurden portionsweise 28,68 kg vollentsalztes Wasser zugegeben, um die Reaktionslösung zu verdünnen. Die Temperatur hielt man dabei stets unter 40 °C.

In die teilneutralisierte Lösung wurden 103 g des Diacrylats von Polyethylenglykol der Molmasse 400 (Sartomer SR 344) zugemischt. Danach inertisierte man die Lösung durch Einleiten von Stickstoffgas bis der Sauerstoffgehalt der Reaktionsmischung <2 ppm betrug. Dann wurden 427 g einer 10 %igen wäßrigen Natriumpersulfatlösung eingemischt. Die Reaktionslösung wurde dann unter einem Stickstoffstrom in eine eben aufgestellte und mit Folie abgedeckte Wanne gegossen, so daß die Schichthöhe überall ca. 6 cm betrug. Beim Eingießen der Reaktionslösung in die Wanne dosierte man mit Hilfe von Pumpen folgende Initiatorlösungen gleichmäßig zu: 85 g 10 %ige wäßrige Lösung von 2,2'-Azobis(2-methylpropionamidin)dihydrochlorid (V-50, Wako), 342 g einer 2,5 Gew.%igen Wasserstoffperoxidlösung und 102 g einer 2,5 Gew.%igen Ascorbinsäurelösung.

Die Polymerisation setzte innerhalb weniger Minuten ein. Nach Erreichen der Peaktemperatur ließ man das Gel noch 4 Stunden in der Wanne altern. Es wurde dann in Stücke geschnitten, mittels eines handelsüblichen Fleischwolfs zu einem feinkrümeligem Gel zerkleinert und 3 h bei 160°C im Umluftschrank auf Horden getrocknet.

Anschließend wurde der getrocknete Superabsorberkuchen mechanisch zerkleinert, auf einem Walzenstuhl gemahlen, und die Fraktion 300 - 850 µm ausgesiebt. Diese Fraktion wurde für die weiteren Untersuchungen verwendet. Der teilchenförmige Superabsorber (Grundpolymer) hatte folgende typische Eigenschaften: CRC = 37 g/g, extrahierbare Anteile nach 16h Lagerung in 0,9 %iger Kochsalzlösung = 9,9 %, Restmonomere (Acrylsäure) = 390 ppm.

Ein Teil dieser Fraktion wurde gemäß der in WO 99/42494 beschriebenen Weise mit 2-Oxazolidinon nachvernetzt, indem man ein Gemisch aus 0,10 % 2-Oxazolidinon, 1,47 % Isopropanol und 3,43 % vollentsalztem Wasser (Gewichtsangaben sind jeweils bezogen auf zu vernetzenden Superabsorber) homogen auf das Superabsorbergranulat aufsprühte. Dieses Material wurde anschließend bei 185 °C für 60 min im Umlufttrockenschrank getempert. Das so erhaltene an der Oberfläche nachvernetzte teilchenförmige Hydrogel hatte folgen Eigenschaften:
CRC = 30 - 31 g/g
AUL 0.7 psi = 25 - 26 g/g
SFC = 25 - 35
Restmonomere (Acrylsäure) = 570 ppm
Farbzahlen L = 84 / a = -0,6 / b = 15.

### Beispiel 1

Das Vergleichsbeispiel wurde mit den Ausnahmen wiederholt, daß man zur Herstellung der Monomerlösung in einem Kunststoffaß mit innenliegendem Wärmeaustauscher 4,27 kg Acrylsäure vorlegte und portionsweise 16,73 kg festes Natriumacrylatsalz sowie 39 kg vollentsalztes Wasser eintrug. Die Mischung wurde dabei solange intensiv gerührt, bis sich eine völlig homogene Lösung gebildet hatte. Die Temperatur wurde im Bereich von 20 - 40 °C gehalten. Die so hergestellte Monomerlösung wurde dann nach der im Vergleichsbeispiel gegebenen Vorschrift polymerisiert.

Das Grundpolymer (Teilchengröße 300 bis 850 µm) hatte folgende Eigenschaften: CRC = 37,5 g/g, extrahierbare Anteile nach 16h Lagerung in 0,9 % Kochsalzlösung = 9,7 %, Restmonomere (Acrylsäure) = 320 ppm.

Das teilchenförmige Grundpolymer wurde anschließend, wie im Vergleichsbeispiel beschrieben, einer Oberflächennachvernetzung unterworfen. Man erhielt ein teilchenförmiges Hydrogel, das folgende typische Eigenschaften hatte:
CRC = 30 - 31 g/g
AUL 0.7 psi = 25 - 26 g/g
SFC = 25 - 35
Restmonomere (Acrylsäure) = 380 ppm
Farbzahlen L = 92 / a = -0,4 / b = 7.

## Patentansprüche

1. Verfahren zur Herstellung von Polymeren, die Natriumacrylateinheiten enthalten, durch radikalische Polymerisation von Natriumacrylat und gegebenenfalls anderen Monomeren in wäßrigem Medium, **dadurch gekennzeichnet, daß** man eine wäßrige Lösung oder Dispersion von Natriumacrylat einsetzt, die durch Lösen oder Dispergieren von festem Natriumacrylat in einem wäßrigen Medium erhältlich ist.

2. Verfahren nach Anspruch 1, **dadurch gekennzeichnet, daß** man eine wäßrige Lösung von Natriumacrylat einsetzt, die 10 bis 100 Mol-% Natriumacrylat und 0 bis 90 Mol-% Acrylsäure enthält.

3. Verfahren nach Anspruch 1 oder 2, **dadurch gekennzeichnet, daß** man eine wäßrige Lösung von Natriumacrylat einsetzt, die 10 bis 95 Mol-% Natriumacrylat und 5 bis 90 Mol-% Acrylsäure enthält.

4. Verfahren nach Anspruch 1 oder 2, **dadurch gekennzeichnet, daß** man eine wäßrige Lösung von Natriumacrylat einsetzt, die 40 bis 90 Mol-% Natriumacrylat und 10 bis 60 Mol-% Acrylsäure enthält.

5. Verfahren nach einem der Ansprüche 1 bis 4, **dadurch gekennzeichnet, daß** die wäßrige Lösung 0,001 bis 5 Mol-% eines mindestens zwei ethylenisch ungesättigte Doppelbindungen aufweisenden Monomeren enthält.

6. Verfahren nach einem der Ansprüche 1 bis 5, **dadurch gekennzeichnet, daß** man zur Herstellung der wäßrigen Monomerlösung festes, wasserfreies Natriumacrylat einsetzt.

7. Verfahren nach einem der Ansprüche 1 bis 6, **dadurch gekennzeichnet, daß** man festes Natriumacrylat mit einem Wassergehalt von 0,1 bis 10 Gew.-% einsetzt.

8. Natriumacrylateinheiten enthaltende Polymere, **dadurch gekennzeichnet, daß** sie erhältlich sind nach dem Verfahren der Ansprüche 1 bis 7.

9. Verwendung von festem Natriumacrylat zur Herstellung von Polymeren durch Lösen des festen Natriumacrylats in Wasser zu einer wäßrigen Monomerlösung und Polymerisieren der Monomerlösung gegebenenfalls in Gegenwart von anderen Monomeren.

10. Verfahren nach einem der Ansprüche 1 bis 9, bei dem das feste Natriumacrylat ganz oder teilweise durch ein anderes wasserlösliches Salz der Acrylsäure ersetzt wird.

## Claims

1. A process for producing sodium acrylate polymer by free-radical polymerization of sodium acrylate without other monomers in an aqueous medium, which comprises using sodium acrylate in the form of an aqueous solution or dispersion obtainable by dissolving or dispersing solid sodium acrylate in an aqueous medium.

2. The process according to claim 1, wherein the aqueous solution of sodium acrylate used comprises from 10 to 100 mol% of sodium acrylate and from 0 to 90 mol% of acrylic acid.

3. The process according to claim 1 or 2, wherein the aqueous solution of sodium acrylate used comprises from 10 to 95 mol% of sodium acrylate and from 5 to 90 mol% of acrylic acid.

4. The process according to claim 1 or 2, wherein the aqueous solution of sodium acrylate used comprises from 40 to 90 mol% of sodium acrylate and from 10 to 60 mol% of acrylic acid.

5. The process according to any of claims 1 to 4, wherein the aqueous solution contains from 0.001 to 5 mol% of a monomer comprising at least two ethylenically unsaturated double bonds.

6. The process according to any of claims 1 to 5, wherein the aqueous monomer solution is prepared using solid anhydrous sodium acrylate.

7. The process according to any of claims 1 to 6, wherein the solid sodium acrylate used has a water content from 0.1% to 10% by weight.

8. Sodium acrylate polymer obtainable by the process of claims 1 to 7.

9. The use of solid sodium acrylate for producing polymers by dissolving the solid sodium acrylate in water to form an aqueous monomer solution and polymerizing the monomer solution in the presence or absence of other monomers.

10. The process according to any of claims 1 to 9, wherein the solid sodium acrylate is wholly or partly replaced by another water-soluble salt of acrylic acid.

## Revendications

1. Procédé de préparation de polymères contenant des unités acrylate de sodium, par polymérisation par voie radicalaire d'acrylate de sodium et éventuellement d'autres monomères dans un milieu aqueux, **caractérisé en ce qu'**une solution ou une dispersion aqueuse d'acrylate de sodium est utilisée, qui peut être obtenue par dissolution ou dispersion d'acrylate de sodium solide dans un milieu aqueux.

2. Procédé selon la revendication 1, **caractérisé en ce qu'**on utilise une solution aqueuse d'acrylate de sodium, qui contient 10 à 100 % en moles d'acrylate de sodium et 0 à 90 % en moles d'acide acrylique.

3. Procédé selon la revendication 1 ou 2, **caractérisé en ce qu'**on utilise une solution aqueuse d'acrylate de sodium, qui contient 10 à 95 % en moles d'acrylate de sodium et 5 à 90 % en moles d'acide acrylique.

4. Procédé selon la revendication 1 ou 2, **caractérisé en ce qu'**on utilise une solution aqueuse d'acrylate de sodium, qui contient 40 à 90 % en moles d'acrylate de sodium et 10 à 60 % en moles d'acide acrylique.

5. Procédé selon l'une quelconque des revendications 1 à 4, **caractérisé en ce que** la solution aqueuse contient 0,001 à 5 % en moles d'un monomère comportant au moins deux liaisons doubles éthyléniquement insaturées.

6. Procédé selon l'une quelconque des revendications 1 à 5, **caractérisé en ce qu'**on utilise de l'acrylate de sodium anhydre solide pour la préparation de la solution aqueuse de monomère.

7. Procédé selon l'une quelconque des revendications 1 à 6, **caractérisé en ce qu'**on utilise de l'acrylate de sodium solide ayant une teneur en eau de 0,1 à 10 % en poids.

8. Polymères contenant des unités acrylate de sodium, **caractérisés en ce qu'**ils peuvent être obtenus par le procédé selon les revendications 1 à 7.

9. Utilisation d'acrylate de sodium solide pour la préparation de polymères par dissolution de l'acrylate de sodium solide dans de l'eau pour donner une solution aqueuse de monomère et par polymérisation de la solution de monomère, éventuellement en présence d'autres monomères.

10. Procédé selon l'une quelconque des revendications 1 à 9, dans lequel l'acrylate de sodium solide est remplacé entièrement ou partiellement par un autre sel hydrosoluble de l'acide acrylique.
